# EUROPEAN PATENT APPLICATION

(11) **EP 4 074 625 A1**
(43) Date of publication of application: **19.10.2022**
(21) Application number: 22167939.2
(22) Date of filing: 12.04.2022
(51) Int. Cl.: B65G 1/00, B65G 1/137, B60P 1/00

(54) **MOBILE CROSSDOCKING SYSTEM USING MEGA TRAILER**

(30) Priority: 16.04.2021 NL 2027989
(71) Applicant: Nabuurs B.V., 5443 PR Haps (NL)
(72) Inventor: Nabuurs, Ard, 5443 PR Haps (NL)
(74) Representative: Arnold & Siedsma

(57) **Abstract**

The invention relates to a mobile crossdocking system, comprising a first transport vehicle with a first floor height, a second transport vehicle with a second floor height which is lower than the first floor height, and a mobile crossdock. The mobile crossdock has a third floor height which is approximately equal to or higher than the second floor height, but lower than the first floor height. The invention also relates to such a mobile crossdock, the use of a mega-trailer as a mobile crossdock, and to a method of transferring goods between first transport vehicles and second transport vehicles, wherein the method comprises placing a mobile crossdock.

## Description

The invention relates to a mobile crossdocking system.

In the transport industry, the term crossdocking is used to refer to the act of transferring goods from first vehicles, which are relatively large, like e.g. trucks or semi-trailers, to second, smaller vehicles, like e.g. vans or box vans. As an example, goods coming from a supplier may arrive at a crossdock in first vehicles, and be distributed amongst several second vehicles. Goods from other first vehicles may transferred to the same second vehicles, which may thus comprise of mix of goods from different sources.

Accordingly, crossdocking finds use e.g. when transporting goods to customers in mid- to large sized cities or towns, where goods from a single supplier destined for customers in a single city or town may first be transported together in the relatively large first vehicles, and may then divided across the smaller, second vehicles in order to be distributed to delivery addresses in the city or town. This is known as "last mile" distribution.

In general crossdocking takes place in halls or warehouses, e.g. distribution centers, that provide a protected environment for the transfer between vehicles.

Mobile crossdocking systems have been described, for in US 9,567,168 B1, US 2019/0061593 A1 and US 9,884,734 B1. Although each of these documents presents a theoretically workable solution, the proposed crossdocking systems pose practical problems.

In general coupling the smaller second vehicles to the crossdock is a cumbersome task, requiring elevating the smaller vehicle to bring its floor to the same height as that of the crossdock. The elevation could be achieved using ramps, as is described in e.g. figure 5 of US 9,567,168 B1.

The invention has as its goal to simplify mobile crossdocking by at least partially solving one or more practical challenges associated therewith.

Said goal is achieved by a mobile crossdocking system, comprising at least one first transport vehicle with a first floor height, at least one second transport vehicle with a second floor height which is lower than the first floor height, and at least one mobile crossdock,
wherein the mobile crossdock has a third floor height which is approximately equal to or higher than the second floor height, but lower than the first floor height.

By providing a mobile crossdock at a height lower than the first floor height, docking the second vehicles becomes easier. In particular, a height difference between the second vehicles and the crossdock may be easily bridgeable, for instance using ramps inside the second vehicles and the crossdock, the ramps spanning the height difference. In particular, it may therefore not be necessary to raise the second vehicles themselves in order to level their floors with the crossdock. This facilitates docking the second vehicles to the crossdock.

At the same time, a challenge remains for docking the first vehicles, since a difference in floor height with the crossdock exist. However, as in general the first vehicles are bigger, they need to be docked less often. Thus, any challenges in docking the first vehicles occur less often.

Moreover, it may in general be easier to lower a floor of a first vehicle, than it may be to elevate the floor of a second vehicle in order to reach a similar height as the crossdock. For that reason, it is advantageous if the third floor height is closer to the second floor height than to the first floor height.

In particular, the third floor height is relatively low, e.g. maximally 90 cm, optionally approximately 85 cm.

Such a low third floor height removes the need for elevating second vehicles of comparable heights, thereby allowing crossdocking using compact vehicles that are suited for last mile distribution in urban environments, such as vans and box vans. Such vehicles have floor heights of approximately 85 cm.

In order to provide a sufficiently low third floor height, the at least one mobile crossdock may comprise a mega-trailer. As compared to a regular trailer, a mega-trailer has a lower floor height. In order to provide said low floor height, mega-trailers are usually outfitted with relatively small wheels. Correspondingly, mega-trailers may require a secondary braking system to compensate for an increased rotational speed of the smaller wheels. Mega-trailers allow for a larger load volume, in particular by allowing a load area that is higher than usual, for instance approaching 3 meters, i.e. of over 2.9 m. The skilled person is readily able to distinguish between mega-trailers and normal trailers.

Mega-trailers may be outfitted with air suspension allowing them to adjust the floor height between 85 cm and 90 cm.

It must be noted that in general, differences in the order of several centimeters exist from vehicle to vehicle, depending on e.g. wear of the tires, or the (air) suspension. As such, measurements relating to the floor height herein are to be understood with an accuracy of approximately 5 cm.

In order to facilitate coupling of the vehicles to the at least one mobile crossdock, it may comprise at least one vehicle dock arranged in a side wall of the at least one mobile crossdock. The vehicle dock may comprise a door, hatch or the like, which is generally sized to correspond to the rear of the corresponding vehicle.

In particular, the at least one, in particular exactly one, vehicle dock may be provided on a rear end of the mobile crossdock. Several mobile crossdocks may be lined up in parallel, so that their rearends provide several adjacent vehicle docks. In particular, two or three mobile crossdocks may be lined up in parallel.

The vehicle docks on the rear end are preferably arranged for connecting with first transport vehicles. Other vehicle docks, e.g. for the second transport vehicles, can be arranged in the transversal side walls of the mobile crossdock(s).

The vehicle docks may comprise an awning. The awning can be used to prevent precipitation from falling between the mobile crossdock and a docked vehicle.

Further, the at least one vehicle dock may comprise a bumper. The bumper may cushion impacts from vehicles hitting the crossdock while docking, in order to prevent damage to the crossdock and/or the vehicles. Further, the bumpers may form a stop that can be positively engaged by the vehicles so as to clearly define a docked position of the vehicles with respect to the crossdock.

A plurality of vehicle docks may be arranged in the same and/or different side walls of the at least one mobile crossdock. As such, multiple vehicles may be docked to the mobile crossdock at once. Thus, goods may be moved from one vehicle to the other through the mobile crossdock, without having to move the vehicles in the meantime.

The vehicle docks may differ in size. In particular, several relatively large and several relatively small vehicle docks may be provided for the first and second vehicles respectively. In particular, the smaller vehicle docks may be provided on one side of the mobile crossdock, whereas the larger vehicles docks are provided on an opposite side of the mobile crossdock. Such a configuration allows docking the first vehicles on the one side, and the second vehicles on the other side. Such a configuration may allow a relatively large portion of goods to be transferred uni-directionally, as said relatively large portion may need to be transferred from the first to the second vehicles. In is noted that other transfer directions are not necessarily obstructed and thus may still be used, however transferring from first to second vehicles is made relatively easy.

Owing to the difference in size, it is possible to arrange a different number of vehicle docks on either side of the at least one mobile crossdock, although this may also be achieved with vehicle docks of the same size.

The advantage of having more vehicle docks on one side as compared to the other, is to allow docking more of e.g. the second vehicles. As the second vehicles are generally smaller, this may remove or reduce the need to redock while goods are being transferred.

The at least one first transport vehicle may be lowerable, for example by relaxing air suspension, between a working position, in which a floor of the at least one first transport vehicle is at the first floor height, and a temporary position, in which the floor is lower than the first floor height, in particular approximately equal to the third floor height.

Lowering the first transport vehicle may facilitate docking the first vehicle to the mobile crossdock, by removing or reducing the height difference in their respective floors. At the same time, the floor height being relatively high in the working position may provide sufficient clearance for safely driving the first vehicle.

In particular, the first floor height may be between 90 and 100 cm. If the first floor height is higher than 90 cm, a lowerable first vehicle is especially advantageous.

According to another aspect of the invention, which may be applied regardless of the first, second or third floor height, the system may comprise means for storing electrical energy and at least one coupler for coupling the at least one first transport vehicle and/or the at least one second transport vehicle to the means for storing electrical energy, for charging a battery thereof.

Providing such means for storing electrical energy allows charging the first and/or second vehicles while crossdocking. This removes the need for an electricity connection on site, so that the mobile crossdock system can be used in many different places. Means for storing electrical energy should herein be regarded as any energy storage means able to output electrical energy. In particular, the use of batteries is considered.

The means for storing the electrical energy may be provided in the mobile crossdock or a separate vehicle. In the last case, the crossdocking system may be very versatile, and may for instance allow using different storage means at different times, thereby allowing storage means to be recharged or refilled separate from the crossdock.

It may be advantageous when the separate vehicle is connectable to the at least one mobile crossdock. Such a configuration may facilitate charging during crossdocking.

The crossdocking system may comprise two mobile crossdocks configured for side-by-side connection to each other. Such crossdocks may be connected in a side-by-side fashion, i.e. alongside each other, so that a relatively large crossdock area may be created spanning across the two crossdocks. Each crossdock may be provided with an at least partly removable sidewall, so that the side walls of the crossdocks facing each other can be at least partly removed in order to provide a passage from one crossdock to the other. It is also possible to align vehicle docks of the two crossdocks with each other, in order to provide one or more of said passages.

The invention also relates to a mobile crossdock for transferring goods between first transport vehicles with a first floor height and second transport vehicles with a second floor height which is lower than the first floor height, wherein the mobile crossdock has a third floor height which is approximately equal to or higher than the second floor height, but lower than the first floor height.

Such a mobile crossdock may be used in a crossdocking system as outlined above, and may therefore comprise all above-described features in any suitable combination.

In particular, such a mobile crossdock may comprise a mega-trailer, for example with vehicle docks provided at its side or sides.

The invention also relates to the use of a mega-trailer as a mobile crossdock as described above, or in a mobile crossdocking system as described above.

The invention further relates to a method of transferring goods between first transport vehicles with a first floor height and a second transport vehicles with a second floor height which is lower than the first floor height, wherein the method comprises the following steps to be executed in any suitable order:
a) providing goods in such a first transport vehicle;
b) providing such a second transport vehicle;
c) placing at least one mobile crossdock with a third floor height, which is approximately equal to or higher than the second floor height, but lower than the first floor height;
d) coupling the first and second transport vehicles to the at least one mobile crossdock; and
e) transferring goods between the first and second transport vehicles using the at least one mobile crossdock.

The method may be implemented with a crossdocking system as described as above, and may provide the corresponding advantages.

Step d) of the method may comprise temporarily lowering a floor of the first vehicle. Thereby, a difference between the first and third floor height can be reduced temporarily, in order to facilitate transferring goods into or out of the first vehicle.

In particular, a mega-trailer may be placed as the crossdock in step c). A mega-trailer has a sufficiently low floor height, and is mobile.

Additionally or alternatively, it is possible to place two mobile crossdocks side by side, and then interconnecting them. As such, a larger crossdocking area can be created. Interconnection the crossdocks may in particular comprise providing a direct passage from one crossdock to the other, for instance by aligning vehicle docks of the two crossdocks, or by removing at least a part of the respective sides of the crossdocks that face each other.

While goods are being transferred, and possibly during other steps of the method, it is advantageous to charge the first and/or the second transport vehicle using means for storing electrical energy. Such means may be provided in a separate vehicle.

The invention will be further elucidated with reference to the attached drawings, in which:
Figure 1 shows schematically a plan view of a crossdocking system;
Figure 2 shows schematically a plan view of another crossdocking system;
Figure 3 shows schematically a side view of a crossdock; and
Figure 4 shows schematically a rear view of transport vehicles and a crossdock.

Like elements of different embodiments will be referred to using reference numerals increased with one hundred (100).

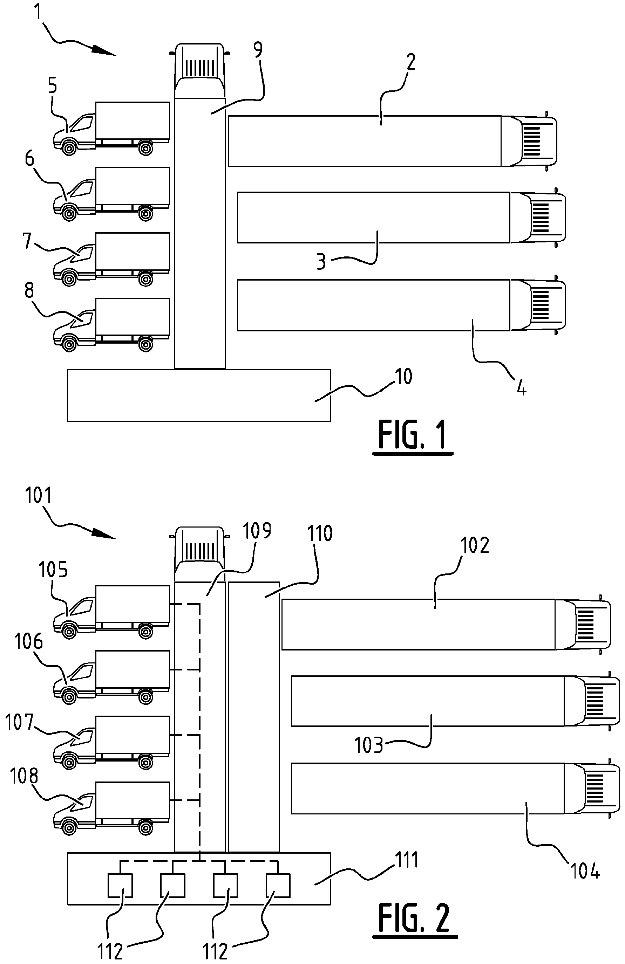

Figure 1 shows a mobile crossdocking system 1. The system 1 comprises first transport vehicles 2, 3, 4 which have a first floor height h1. The first transport vehicles 2, 3, 4 in this example are semi-trailers of a standard type, and according to the disclosure herein may be used to transport relatively large amounts of goods from e.g. suppliers to a location for crossdocking. Standard trailers have a first floor height h1 of approximately 100 cm. The system further comprises second transport vehicles 5, 6, 7, 8 with a second floor height h2. The second floor height h2 is lower than the first floor height (h2 < h1). The second transport vehicles 5, 6, 7, 8 in the example shown, are smaller vehicles, such as vans or box vans. Such vehicles have a floor height h2 of 85 cm. As an example, second transport vehicles 5, 6, 7, 8 may be at least partially filled using goods from one or several first vehicles 2, 3, 4. This act is referred to as crossdocking. Afterwards, the second transport vehicles 5, 6, 7, 8 may be used to transport goods for instance directly to consumers, e.g. at their homes.

In order to allow crossdocking at any desired location, such as a parking lot, the crossdocking system further comprises mobile crossdocks 9, 10. The mobile crossdocks 9, 10 shown in this figure as an example, are mega-trailers 9, 10. The mega-trailers have a third floor height h3. As compared to standard trailers, the mega-trailers have a lower floor height h3. In this particular example, the floor height of the mega trailers 9, 10 is approximately 85 cm, and therefore equal to the first floor height h1. The first h1 and third h3 floor heights being equal allows easy transfer of goods from the crossdocks 9, 10 to the second transport vehicles 5, 6, 7, 8 and vice versa. Further, it allows docking the second transport vehicles 5, 6 ,7, 8 to the crossdock 9, 10 without having to elevate the second transport vehicle 5, 6, 7, 8 via e.g. a ramp.

The difference in floor height between the crossdocks 9, 10 and the first transport vehicles 2, 3, 4 can be bridged by lowering the first transport vehicles 2, 3, 4. Sufficient lowering may be achieved by relaxing the air suspension of the first transport vehicles 2. As such, the first transport vehicles 2, 3, 4 may be brought at substantially the same height as the crossdock 9, 10 and the second transport vehicles 5, 6, 7, 8.

It is noted deviations of approximately 5 cm may exist in between e.g. the floor height of the first and second transport vehicles 2, 3, 4, 5, 6, 7, 8 and the crossdocks 9, 10 without causing problems in docking and/or transferring goods. Much larger differences in floor height h1, h2, h3 may make it impractical or impossible to transfer goods from a vehicle 2, 3, 4, 5, 6, 7, 8 to the crossdocks 9, 10 or vice versa.

The crossdocking system 1 of figure 1 may be used advantageously as follows. Inbound goods in a first transport vehicle 4 may be delivered at the crossdock 9. Another crossdock 10, which in this example is placed at an angle with respect to the first crossdock 9, may function as an area in which goods from the first transport vehicle 4 can be placed in a desired order. Other first vehicles 2, 3 may be used as desired, for instance for delivering additional goods. As a particular example, a first transport vehicle 2 may be used as a designated return vehicle 2, for instance for placing therein packages that need to be returned to a supplier. Yet another first transport vehicle 3 may be used for other goods to be returned.

Figure 2 shows another crossdocking system 101 which differs from that of figure 1 in that crossdocks 109 and 110 have been put side to side and have been connected to each other by providing a direct passage in between the two crossdocks 109, 110. Accordingly, the crossdocks 109, 110 provide a relatively wide area for crossdocking. The shown crossdocking system 101 also depicts a separate vehicle 111 which is provided with batteries 112 for storing electrical energy. The second transport vehicles 105, 106, 107, 108 are connected to the batteries 112 so that they may be charged during crossdocking.

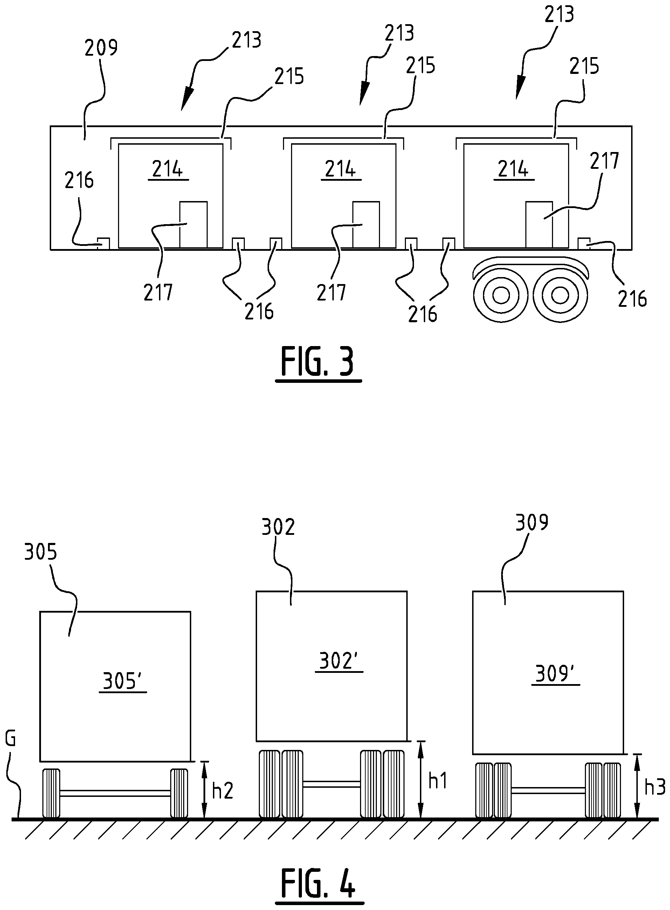

Figure 3 shows a side of a crossdock 209. The side shown is provided with three vehicle docks 213 to which first transport vehicles 2, 3, 4 can dock. To allow transferring goods to and from the crossdock 209, each vehicle dock 213 is provided with a loading door 214. Above the loading door 214, an awning 215 has been provided to prevent water from falling in between a docked vehicle and the crossdock 209. The loading doors 214 have further been provided with personnel access doors 217. Further, each vehicle dock 213 has been provided with bumpers 216. The crossdock 209 of figure 3 may be used in the crossdocking systems in figures 1 and 2. In order to allow more second vehicles 5, 6, 7, 8 to dock, it is envisioned to provide a number of smaller vehicle docks 213 on one side of the crossdock 209 and a smaller number of larger vehicle docks 213 on the opposing side.

The floor height of a vehicle is further explained with reference to figure 4, which shows first transport vehicle 302, second transport vehicle 305 and mega-trailer 309 as a crossdock 309. The floor heights h1, h2, h3 of the respective vehicles 302, 305, 309 are defined as the respective distances between a ground G upon which the vehicle stands, and the loading area 305', 302', 309'.

Although the invention has been described herein with reference to specific examples and embodiments, the scope of the invention is not limited thereto. Instead, the invention also covers the subject matter defined by the claims, which now follow.

## Claims

1. Mobile crossdocking system, comprising:
- at least one first transport vehicle with a first floor height;
- at least one second transport vehicle with a second floor height which is lower than the first floor height, and
- at least one mobile crossdock,
wherein the mobile crossdock has a third floor height which is approximately equal to or higher than the second floor height, but lower than the first floor height.

2. Mobile crossdocking system according to the previous claim, wherein the third floor height is maximally 0,90 meter, optionally is equal to approximately 0,85 meter.

3. Mobile crossdocking system according to any of the preceding claims, wherein the at least one mobile crossdock comprises a mega-trailer.

4. Mobile crossdocking system according to any of the preceding claims, wherein the at least one mobile crossdock comprises at least one vehicle dock arranged in a side wall of the at least one mobile crossdock, wherein optionally:
the at least one vehicle dock comprises an awning; and/or
the at least one vehicle dock comprises a bumper; and/or
a plurality of such vehicle docks are arranged in the same and/or different side walls of the at least one mobile crossdock, wherein optionally
a different number of vehicle docks is arranged on either side of the at least one mobile crossdock.

5. Mobile crossdocking system according to any of the preceding claims, wherein the at least one first transport vehicle is lowerable, for example by relaxing air suspension, between a working position, in which a floor of the at least one first transport vehicle is at the first floor height, and a temporary position, in which the floor is lower than the first floor height.

6. Mobile crossdocking system according to any of the preceding claims, further comprising means for storing electrical energy and at least one coupler for coupling the at least one first transport vehicle and/or the at least one second transport vehicle to the means for storing electrical energy, for charging a battery thereof.

7. Mobile crossdocking system according to the previous claim, wherein the means for storing the electrical energy are provided in a separate vehicle.

8. Mobile crossdocking system according to the previous claim, wherein the separate vehicle is connectable to the at least one mobile crossdock.

9. Mobile crossdocking system according to any of the preceding claims, comprising two mobile crossdocks configured for side-by-side connection to each other.

10. Mobile crossdock for transferring goods between first transport vehicles with a first floor height and second transport vehicles with a second floor height which is lower than the first floor height, wherein the mobile crossdock has a third floor height which is approximately equal to or higher than the second floor height, but lower than the first floor height.

11. Use of a mega-trailer as a mobile crossdock, for example according to claim 10, in a mobile crossdocking system, for example according to any of claims 1 - 9.

12. Method of transferring goods between first transport vehicles with a first floor height and a second transport vehicles with a second floor height which is lower than the first floor height, wherein the method comprises the following steps to be executed in any suitable order:
a) providing goods in such a first transport vehicle;
b) providing such a second transport vehicle;
c) placing at least one mobile crossdock with a third floor height, which is approximately equal to or higher than the second floor height, but lower than the first floor height;
d) coupling the first and second transport vehicles to the at least one mobile crossdock; and
e) transferring goods between the first and second transport vehicles using the at least one mobile crossdock.

13. Method according to the previous claim, wherein step d) comprises temporarily lowering a floor of the first vehicle and/or wherein step c) comprises placing two mobile crossdocks side by side and interconnecting them.

14. Method according to any of the preceding method claims, wherein step c) comprises placing a mega-trailer as the crossdock.

15. Method according to any of the preceding method claims, wherein at least during step e) the first and/or second transport vehicle is charged using means for storing electrical energy.
